# EUROPÄISCHE PATENTSCHRIFT

(11) **EP 0 826 754 B1**
(45) Veröffentlichungstag und Bekanntmachung des Hinweises auf die Patenterteilung: **14.04.2004**
(21) Anmeldenummer: 97113948.0
(22) Anmeldetag: 13.08.1997
(51) Int. Cl.: C09J 7/02

(54) **Selbstklebende Schutzfolie**
Pressure-sensitive protective film
Film de protection autocollant

(30) Priorität: 03.09.1996 DE 19635704
(43) Veröffentlichungstag der Anmeldung: 04.03.1998
(73) Patentinhaber: Tesa AG, 20253 Hamburg (DE)
(72) Erfinder: Malek, Wasfi N., Dr., 22529 Hamburg (DE)

(56) Entgegenhaltungen:
- EP-A- 0 203 399
- EP-A- 0 592 913
- WO-A-95/33012
- US-A- 5 643 676
- PATENT ABSTRACTS OF JAPAN vol. 095, no. 011, 26. Dezember 1995 & JP 07 216325 A (MITSUBISHI CHEM MKV CO), 15. August 1995 & DATABASE WPI Derwent Publications Ltd., London, GB; AN 95-317733

## Beschreibung

Die Erfindung betrifft eine selbstklebende Schutzfolie vorzugsweise zum Schutz des frischen Abschlußlacks von Automobilen und zum Schutz von frisch lackierten Bandstahlblechen gegen Verschmutzungen und Beschädigungen während der Montage und des Transports.

Die Konservierung und der Schutz von Kraftfahrzeugen während des Transports vom Hersteller zum Händler wird schon seit geraumer Zeit praktiziert.
Bekannt ist, daß zum Konservieren von Automobilen Paraffinwachse in der Stärke von 5 bis 20 µm aufgetragen werden. Es hat sich aber gezeigt, daß insbesondere bei waagerecht liegenden Flächen der Fahrzeuge eine derart dünne und zumeist ungleichmäßige Schicht gegen äußere Einflüsse, wie beispielsweise die ätzende Wirkung von Vogelkot, nicht genügend Schutz bietet.
Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Selbstklebende Oberflächenschutzfolien für Kraftfahrzeuge sind ebenfalls seit einiger Zeit bekannt. In den meisten Fällen handelt es sich dabei um permanent klebende Schutz- und Dekorfolien, wie zum Beispiel eine Steinschlagschutzfolie. Diese Selbstklebefolien verbleiben nach ihrer Montage permanent am Fahrzeug.

Reversibel klebende Selbstklebefolien zum Schutz des Automobils während des Transports haben bisher nur in einigen Sonderfällen ohne großen Erfolg Verwendung gefunden.

So wurde im Jahre 1977 eine Selbstklebefolie der Firma Beiersdorf AG, bestehend aus einer PVC-Folie mit einer vernetzten Selbstklebemasse aus Polyacrylat und Isocyanat, zum Schutz des Lacks auf der Frontpartie des Fahrzeugs gegen Steinschlag und Verschmutzungen durch aufprallende Insekten während des Einfahrvorgangs des Automobils verwendet. Die Anwendung erwies sich jedoch als problematisch, weil die Polyacrylatmasse sehr hochgradig vernetzt werden mußte, um keine Wechselwirkung mit dem Fahrzeuglack zu zeigen. Dies führte zu Anwendungsproblemen wegen unzureichender Haftfestigkeit der Folie.

Bekannt sind weiterhin Polyacrylatmassen, die unvernetzt sind. Unterwirft man diese Polyacrylatmassen einer Wechselklimalagerung (eine untersuchte Variante eines derartigen Wechselklimas siehe Tabelle im Beispiel 1), so zeigen sie eine gute Verträglichkeit mit Lackoberflächen. Auf der anderen Seite sind diese aber so weich, daß sie beim Abziehen der Folie Rückstände der Masse auf dem Haftgrund hinterlassen. Sobald diese Massen chemisch oder strahlenvernetzt werden, lassen sie sich rückstandsfrei abziehen, verursachen aber auf der anderen Seite bleibende Deformationen an der Lackoberfläche.

Aus der japanischen Patentanmeldung JP 02 199 184 ist ein strahlenvernetzbarer Haftklebstoff bekannt, bei dem für die Schutzanwendung auf Lackschichten eine niedrige Glasübergangstemperatur eingestellt werden muß, um bleibende Verformungen der Lackschicht zu verhindern. Hier treten Probleme wegen mangelnder Haftfestigkeit der Selbstklebefolie auf Kraftfahrzeugen während des Transports und der Lagerung im Freien auf.

Die europäische Patentanmeldung EP 0 519 278 offenbart zum Schutz von Automobilen eine Folie, die aus einem Träger besteht, der mit einem Haftklebstoff auf Kautschukbasis, der ein dynamisches Elastizitätsmodul von 2 x 10⁵ bis 7 x 10⁶ dyn/cm², dies entspricht in SI-Einheiten einem Wert von 2 x 10⁴ bis 70 x 10⁴ Pa, bei 60 °C aufweist, beschichtet ist. Der Kleber kann darüber hinaus mit einem Silikonöl oder einem niedermolekularen Acrylpolymerisat abgemischt sein.
Anwendungstechnische Versuche mit einer derartigen Selbstklebefolie zeigen eine relativ gute Verträglichkeit mit Lackoberflächen. Die Haftfestigkeit nach Wechselklimalagerung auf in der Automobilindustrie gebräuchlichen Lacken ist jedoch so gering, daß die in der Praxis geforderte Verklebungsfestigkeit nicht immer ausreichend gegeben ist. Insbesondere bei Feuchteeinfluß auf die Folie ist die Haftfestigkeit häufig derart reduziert, daß sich die Folie während des Transports der mit ihr geschützten Fahrzeuge von diesen ablöst, so daß keine Schutzwirkung mehr vorhanden ist.
Darüber hinaus weist die Selbstklebemasse keine Verträglichkeit mit den im Automobilbau üblichen Dichtungsgummis auf; beim Abziehen der Schutzfolie von Fensterprofilen verbleiben auf dem Gummi Masserückstände der Klebebeschichtung.

In der europäischen Patentanmeldung EP 0 592 913 ist eine Oberflächenschutzfolie beschrieben, die sich aus einem Copolymerisat aus α-(alpha-)Olefinen und ungesättigten, polaren Comonomeren zusammensetzt. Das Aufbringen einer zusätzlichen Klebebeschichtung erfolgt bei dieser Schutzfolie nicht. Auch hier wird die Verwendung als Oberflächenschutzfolie beim Transport von Automobilen vorgeschlagen.
Eine derartige Folie weist zugegebenermaßen einen einfachen Aufbau auf, zeigt aber in ihrer Verwendung deutliche Nachteile, insbesondere bei hohen Temperaturen oder hohen mechanischen Beanspruchungen, wie sie beispielsweise auf dem Transport von mit der erfindungsgemäßen Schutzfolie eingedeckten Kraftfahrzeugen auf den offenen Fahrzeugtransportwagen der Bahnen auftreten. In diesen Fällen erweist sich die Klebkraft der Schutzfolie als nicht mehr ausreichend.

Aufgabe der Erfindung war es, hier Abhilfe zu schaffen, insbesondere eine selbstklebende Schutzfolie zu schaffen, die die Nachteile des Stands der Technik nicht oder zumindest nicht in dem Umfang aufweist.

Gelöst wird diese Aufgabe durch eine selbstklebende Schutzfolie, wie sie in den Patentansprüchen näher gekennzeichnet ist.

Bei der erfindungsgemäßen Schutzfolie handelt es sich um eine selbstklebende Schutzfolie, die als Träger eine Folie besitzt, die mit einer Selbstklebemasse aus Polyethylenvinylacetat mit einem Vinylacetatgehalt von 40 Mol-% bis 80 Mol-%, insbesondere 70 Mol-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, beschichtet ist. Die Folie selbst besteht aus einer Mischung aus
- 40 Gew.-Teilen bis 70 Gew.-Teilen Polyethylen,
- 20 Gew.-Teilen bis 40 Gew.-Teilen Polypropylen,
- 8 Gew.-Teilen bis 15 Gew.-Teilen Titandioxid,
- 0,3 Gew.-Teilen bis 0,7 Gew.-Teilen Lichtschutzstabilisatoren.

Von den 40 Gew.-Teilen bis 70 Gew.-Teilen Polyethylen in der Folie sind vorzugsweise 30 Gew.-Teile bis 50 Gew.-Teile schlagzähes Polyethylen.

Die Verwendung des Titandioxid-Batches bewirkt eine erhöhte UV-Reflexion sowie ein verringertes Aufwärmen der Schutzfolie bei starker Sonneneinstrahlung.
Als Lichtschutzstabilisatoren kommen insbesondere sterisch gehinderte Amine zum Einsatz.

Die als Träger dienende Folie weist eine Dicke von 40 bis 100 µm, bevorzugt 50 bis 60 µm, auf. Weiterhin ist die Folie in einer bevorzugten Ausführungsform halogenfrei.

Zwischen Folie und Selbstklebemasse kann ein Vorstrich aus Polyethylenvinylacetat mit einem Polyethylenanteil von 30 Gew.-Teilen bis 50 Gew.-Teilen und 0,3 Gew.-Teilen bis 0,7 Gew.-Teilen Lichtschutzstabilisatoren aufgebracht sein.
Der Vorstrich ist vorzugsweise halogenfrei, und der Vorstrich wird vorteilhafterweise aus der Schmelze aufgetragen.

Zur Herstellung einer besonders vorteilhaften Ausführungsform der Schutzfolie wird die Folie in einem Arbeitsgang zusammen mit dem Vorstrich coextrudiert, wobei die Dicke des Vorstrichs vorzugsweise ungefähr 15 µm beträgt.
Der so hergestellte Verbund aus Folie und Vorstrich zeigt die folgenden physikalischen Parameter, wie sie aus der anschließenden Tabelle 1 zu ersehen sind.

**Tabelle 1:**

| Physikalische Parameter des Verbunds aus Folie und Vorstrich | |
|---|---|
| Gesamtdicke Folie und Vorstrich | 65 µm |
| Gesamtgewicht Folie und Vorstrich | 63 g/m² |
| Zugfestigkeit längs | ≥ 30 N/mm² |
| Zugfestigkeit quer | ≥ 20 N/mm² |
| Dehnung längs | ≥ 450 % |
| Dehnung quer | ≥ 450 % |
| Schlagzugzähigkeit längs | ≥ 3000 mJ/mm² |
| Schlagzugzähigkeit quer | ≥ 400 mJ/mm² |

Die Schutzfolie besitzt eine Dicke von 50 bis 200 µm, vorzugsweise 65 bis 80 µm.

Zur Optimierung der Eigenschaften kann die zum Einsatz kommende Selbstklebemasse mit einem oder mehreren Additiven wie Kolophoniumester, Kohlenwasserstoffharzen, Paraffinölen oder Alterungschutzmitteln abgemischt und darüber hinaus noch halogenfrei sein.

Für selbstklebende Schutzfolien ist der Einsatz unterschiedlicher Klebmassen möglich. Die meisten weisen jedoch gewichtige Nachteile auf, die deren Verwendung stark einschränken.

Entscheidende Entwicklungsgröße für ein Selbstklebesystem, das die an die Verwendung derartiger Schutzfolien geknüpften Bedingungen erfüllt, ist der rheologische Verlauf des compoundierten Selbstklebesystems. So sollte der Glasübergangspunkt, gekennzeichnet durch ein tan δ-Maximum, bei Temperaturen von -5 °C bis -25 °C liegen und im Maximum nahezu frequenzkonstant Werte bis maximal 1,0 annehmen. Dies sichert eine hervorragende Repositionierbarkeit aufgrund sehr niedriger Initialklebkraft. Bei Temperaturen oberhalb von 10 °C bis 30 °C, bevorzugt 20 °C, ist ein Anstieg des tan δ in Abhängigkeit von der Temperatur gefordert. So sollte bei 60 °C der tan δ bei 10⁻² Hz minimal 0,6 betragen, um bei 10 Hz auf minimal 0,4 abzufallen. Dies sichert den deutlichen Anstieg der Verklebungsfestigkeit bereits innerhalb der ersten 30 Minuten nach Verklebung.

Bekannte unpolare Selbstklebemassen aus Polyacrylat und Polyurethan zeigen im Test, in dem sie auf lackierten Blechen aufgebracht sind und dabei einer Wechselklimalagerung unterliegen, eine bessere Lackverträglichkeit als polare Massen. Auf der anderen Seite sind sie jedoch zu weich und zeigen Masserückstände beim Abziehen der Folie. Wenn die Massen chemisch oder strahlenvernetzt sind, führen sie zu unerwünschter Lackdeformation.

Selbstklebemassen auf Naturkautschukharzbasis lassen sich rückstandsfrei bei nur sehr geringer Lackdeformation abziehen. Diese Massen sind allerdings unter Einwirkung von UV-Strahlung nicht alterungsstabil. Dies zeigt sich insbesondere unter extremen Beanspruchungen über einen längeren Zeitraum (sechs Monate), wie sie beispielsweise in Florida auftreten.

Eine Selbstklebemasse aus Polyisobutylen mit dem Verlustmodul G" von G" = 1,29 x 10⁶ dyn/cm², entspricht in SI-Einheiten einem Wert von G" = 12,9 x 10⁴ Pa, und einem Verlustwinkel tan δ von 0,2 (beide Werte gemessen bei einer Temperatur von 60 °C und einer Frequenz von 1 Hz) zeigt nur sehr geringe Lackdeformationen. Allerdings ist die Abzugskraft von der Lackoberfläche nach Wechselklimalagerung sehr niedrig und somit nicht anwendungsgerecht.

Für den Fachmann nicht vorhersehbar zeigt eine Selbstklebemasse aus Polyethylenvinylacetat bei einem Vinylacetatgehalt von 40 Mol-% bis 80 Mol-%, insbesondere 70 Mol-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, die angestrebten Eigenschaften. Die Selbstklebemasse kann auf die Folie aus der Lösung oder aus der Schmelze aufgetragen werden.

Die Selbstklebemasse weist auf der einen Seite auf verschiedenen in der Automobilindustrie gebräuchlichen Einbrennlacken eine gute Haftfestigkeit auf, auch unter Feuchte- oder Feuchtklimaeinfluß, so daß sich die Schutzfolie auch unter Windeinwirkung nicht vom Fahrzeug ablöst, auf der anderen Seite ist sie aufgrund sehr geringer Initialklebkraft reversibel klebend, so daß während der Applizierung eine Korrektur der Lage der Schutzfolie auf dem Fahrzeug möglich ist. Darüber hinaus zeigt die Selbstklebemasse einen deutlichen Anstieg der Verklebungsfestigkeit bereits innerhalb niedriger Initialklebekraft und innerhalb der ersten 30 Minuten nach Verklebung, so daß die Schutzfolie bereits nach einer halben Stunde zum Beispiel einer starken Fahrtwindbelastung (bis zu 160 km/h) ausgesetzt werden kann.
Weiterhin ist durch die erfindungsgemäße Selbstklebemasse eine sehr geringe Abrollkraft gewährleistet.

Insbesondere auf einer 50 µm dicken Folie, die aus der in Anspruch 1 angegebenen Mischung besteht und die einen Vorstrich von Polyethylenvinylacetat mit einem Polyethylenanteil aufweist, zeigt die erfindungsgemäße Selbstklebemasse auf mit Polyurethanlack lackierten und für 30 Minuten bei 130 °C getrockneten Blechen nach einer Wechselklimalagerung, wie sie in Beispiel 1 dieser Beschreibung näher ausgeführt ist, keine Lackdeformation.

Die Abzugskraft der erfindungsgemäßen Schutzfolie von diversen Haftgründen liegt bei praxisgerechten 2 bis 5 N/cm.

Auch die Bestrahlung der Schutzfolie mit UV-Licht, beispielsweise mit einer 300 W starken UV-Lampe mit Sonnenlichtspektrum über 5 Tage, führt zu keiner nachweisbaren Verschlechterung der Eigenschaften der Schutzfolie. Es tritt keine Versprödung auf, und die Selbstklebemasse verursacht weder Lackdeformationen oder Lackverfärbungen noch treten Masserückstände beim Abziehen der Schutzfolie auf.

Die erfindungsgemäße Schutzfolie ist somit besonders zum Montage- oder Transportschutz des frischen Abschlußlacks von Automobilen oder als Bearbeitungs- und Transportschutz von frisch lackierten Bandstahlblechen geeignet.
Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.
Weiterhin zeigt die Schutzfolie bei der Verwendung als Kantensicherungsband zur zusätzlichen Befestigung großflächiger selbstklebender Abdeckfolie hervorragende Eigenschaften.

Darüber hinaus zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und leicht sphärisch geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern können leicht abgedeckt werden.
Der Schutz der vertikalen Flächen am Fahrzeug bietet sich besonders während der Montage derselben an.

Die Schutzfolie ist beständig gegen Sonnenlicht, Feuchtigkeit, Hitze und Kälte, wobei die Witterungsstabilität bis zu einem halben Jahr gegeben ist.

Insbesondere die erfindungsgemäße Abmischung der Trägerfolie mit einem Titandioxid-Batch sowie mit Lichtschutzstabilisatoren führt zu einer Verbesserung der UV-Beständigkeit der Schutzfolie, wie sie für den Fachmann nicht zu erwarten war. Auch höchste Sonneneinstrahlungsquoten, wie sie beispielsweise in Florida an der Tagesordnung sind, führen nicht zu einem Versagen oder Auflösen der Schutzfolie, zumindest nicht über einen Zeitraum von sechs Monaten.

Nach Anwendung der Schutzfolie treten durch die Selbstklebemasse nach einer Lagerung für 14 Tage bei wechselnden Temperaturen sowie unter Witterungseinfluß (siehe Beispiel 1) keine Deformationen der darunter liegenden Lackschicht auf. Darüber hinaus gewährleistet die gleichmäßige Gesamtdicke der Schutzfolie im Vergleich zur Konservierung mit Wachs einen einwandfreien Schutz gegen Verschmutzungen und Beschädigungen des gesamten Fahrzeugs.

Nach Gebrauch ist die Schutzfolie trotz der geforderten guten Haftfestigkeit rückstandsfrei und ohne Reißen der Trägerfolie abziehbar. Selbst auf Dichtungsgummis, wie sie bei Automobilen vielfach Anwendung finden, verbleiben nach dem Abziehen keine Masserückstände.

Da die Schutzfolie halogenfrei ist, ist eine stoffliche oder energetische Verwertung derselben problemlos möglich.

Im folgenden soll die Erfindung anhand von Beispielen erläutert werden, ohne diese damit allerdings unnötig einschränken zu wollen.

### Beispiele

### Beispiel 1

Eine Selbstklebemasse aus einem Polyethylenvinylacetat-Gemisch, bestehend aus 40 Gew.-Teilen Polyethylenvinylacetat mit einem Vinylacetatgehalt von 45 Mol-% und einem Schmelzindex von ≤ 5 g/10 min (190 °C /2,16 Kp) und 60 Gew.-Teilen Polyethylenvinylacetat mit einem Vinylacetatgehalt von 70 Mol-% und einem Schmelzindex von ≤ 5 g/10 min (190 °C / 2,16 Kp), mit einem Verlustwinkel tan δ von 0,65 - 0,41 bei einer Frequenz von 0,1-10 Hz, gemessen bei einer Temperatur von 60 °C, wird 20 %ig in Toluol gelöst und in einer Beschichtungsanlage mit Streichbalken und Trocknungskanal auf einen 1450 mm breiten coextrudierten Verbund mit 15 g/m² auf die Vorstrichseite aufgetragen.
Der Verbund setzt sich zusammen aus einer 50 µm dicken Folie, bestehend aus 60 Gew.-Teilen Polyethylen, davon 40 Gew.-Teile schlagzähes Polyethylen, 30 Gew.-Teilen Polypropylen, 10 Gew.-Teilen TiO₂-Batch und 0,5 Gew.-Teilen Lichtschutzstabilisatoren und einem Vorstrich von einer Dicke von 15 µm, bestehend aus 60 Gew.-Teilen Polyethylenvinylacetat und 40 Gew.-Teilen Polyethylen.

Die Trocknungstemperatur beträgt 80 °C bei einer Verweilzeit von 3 Minuten. Am Kanalende wird die beschichtete Trägerbahn an den Kanten beschnitten und zu Stangen von 200 m Länge und 1400 mm Breite aufgewickelt.

Die so hergestellte Selbstklebefolie läßt sich leicht und faltenfrei abwickeln und beim Gebrauch zum Schutz von Automobilen einwandfrei applizieren. Wegen des guten Tacks und besserer Korrigierbarkeit können die Verklebungsprozesse beschleunigt werden. Nach Gebrauch kann die Selbstklebefolie bis zu einem halben Jahr Verklebungsdauer ohne Mängel wieder abgezogen werden.

Die Schutzfolie ist durch die in der folgenden Tabelle wiedergegebenen physikalischen Eigenschaften gekennzeichnet.

| | |
|---|---|
| Gesamtdicke Schutzfolie: | 80 µm |
| Abzugskraft vom 2K-PU-Lack nach 14 Tagen Wechselklima (wie unten angegeben), einem Abzugswinkel von 180° und einer Abzugsgeschwindigkeit von 300 mm/min: | 3,5 N/cm |
| Abzugskraft von der Rückseite bei einem Abzugswinkel von 180° und einer Abzugsgeschwindigkeit von 300 mm/min: | 0,06 N/cm |

Das Wechselklima besteht aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wird dabei insgesamt zweimal wiederholt.

### Beispiel 2

Eine Selbstklebemasse aus 70 Gew.-Teilen Polyethylenvinylacetat mit einem Vinylacetatgehalt von 45 Mol-% und einem Schmelzindex von 25 g/10 min (190 °C / 2,16 Kp) und aus 30 Gew.-Teilen Kolophoniumester mit einem Erweichungspunkt von 85 °C, mit einem Verlustwinkel tan δ von 1,15 - 0,75 bei einer Frequenz von 0,1-10 Hz, gemessen bei einer Temperatur von 60 °C, wird 20 %ig in Toluol gelöst und in einer Beschichtungsanlage für Selbstklebebänder mit Streichbalken und Trocknungskanal mit 28 g/m² auf eine Folie gemäß Beispiel 1 aufgetragen und bei 80 °C bei einer Verweildauer von 4 Minuten getrocknet. Am Kanalende wird die beschichtete Trägerbahn in Rollen von 66 m Länge und 38 mm Breite aufgeschnitten.

Die so hergestellten Selbstklebebandrollen können als Kantensicherungsband zur zusätzlichen Befestigung großflächiger selbstklebender Abdeckfolie für Automobile benutzt werden. Sie zeichnen sich dadurch aus, daß sie trotz höherer Klebkraft mit den Autolacken gut verträglich sind.

Die Schutzfolie ist durch die in der folgenden Tabelle wiedergegebenen physikalischen Eigenschaften gekennzeichnet.

| | |
|---|---|
| Gesamtdicke Schutzfolie: | 93 µm |
| Abzugskraft vom 2K-PU-Lack nach 14 Tagen Wechselklima (wie unten angegeben), einem Abzugswinkel von 180° und einer Abzugsgeschwindigkeit von 300 mm/min: | 5 N/cm |
| Abzugskraft von der Rückseite bei einem Abzugswinkel von 180° und einer Abzugsgeschwindigkeit von 300 mm/min: | 2,6 N/cm |

Das Wechselklima besteht aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wird dabei insgesamt zweimal wiederholt.

### Beispiel 3

Eine Selbstklebemasse aus einem Polyethylenvinylacetat-Gemisch, bestehend aus 40 Gew.-Teilen Polyethylenvinylacetat mit einem Vinylacetatgehalt von 45 Mol-% und einem Schmelzindex von ≤ 5 g/10 min (190 °C / 2,16 Kp) und 60 Gew.-Teilen Polyethylenvinylacetat mit einem Vinylacetatgehalt von 70 Mol-% und einem Schmelzindex von ≤ 5 g/10 min (190 °C / 2,16 Kp), mit einem Verlustwinkel tan δ von 0,65 - 0,41 bei einer Frequenz von 0,1-10 Hz, gemessen bei einer Temperatur von 60 °C, wird mit 14 g/m² im Dreifachverbund an einer Extrusionsanlage in einer Gesamtstärke von 79 µm in 1500 mm Breite hergestellt.

Der Verbund setzt sich zusammen aus einer 50 µm dicken Folie, bestehend aus 60 Gew.-Teilen Polyethylen, davon 40 Gew.-Teile schlagzähes Polyethylen, 30 Gew.-Teilen Polypropylen, 10 Gew.-Teilen TiO₂-Batch und 0,5 Gew.-Teilen Lichtschutzstabilisatoren und einem Vorstrich von einer Dicke von 15 µm , bestehend aus 65 Gew.-Teilen Polyethylenvinylacetat und 35 Gew.-Teilen Polyethylen.

Der so hergestellte Verbund aus Folie Vorstrich und Selbstklebemasse kann zum großflächigen Schutz von Automobilen wie in Beispiel 1 eingesetzt werden.

Die Selbstklebefolie zeichnet sich dadurch aus, daß sie völlig frei von Lösungsmitteln aus der Schmelze hergestellt wird.

Die Schutzfolie ist durch die in der folgenden Tabelle wiedergegebenen physikalischen Eigenschaften gekennzeichnet.

| | |
|---|---|
| Gesamtdicke Schutzfolie: | 79 µm |
| Abzugskraft vom 2K-PU-Lack nach 14 Tagen Wechselklima (wie unten angegeben), einem Abzugswinkel von 180° und einer Abzugsgeschwindigkeit von 300 mm/min: | 3,1 N/cm |
| Abzugskraft von der Rückseite bei einem Abzugswinkel von 180° und einer Abzugsgeschwindigkeit von 300 mm/min: | 0,05 N/cm |

Das Wechselklima besteht aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wird dabei insgesamt zweimal wiederholt.

Die rheologischen Messungen wurden jeweils mit einem Gerät der Firma Rheometric Scientific unter verformungskonstanten Bedingungen durchgeführt.

## Patentansprüche

1. Selbstklebende Schutzfolie insbesondere für Automobile, **dadurch gekennzeichnet, daß** auf einer Folie als Träger eine Selbstklebemasse aufgetragen ist,
wobei die Folie aus einer Mischung besteht aus
- 40 Gew.-Teilen bis 70 Gew.-Teilen Polyethylen,
- 20 Gew.-Teilen bis 40 Gew.-Teilen Polypropylen,
- 8 Gew.-Teilen bis 15 Gew.-Teilen Titandioxid,
- 0,3 Gew.-Teilen bis 0,7 Gew.-Teilen Lichtschutzstabilisatoren, und
wobei die Selbstklebemasse besteht aus Polyethylenvinylacetat
- mit einem Vinylacetatgehalt von 40 Mol-% bis 80 Mol-%, insbesondere 70 Mol-%, und
- mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz.

2. Selbstklebende Schutzfolie nach Anspruch 1, **dadurch gekennzeichnet, daß** auf die Folie ein Vorstrich aus Polyethylenvinylacetat mit einem Polyethylenanteil von 30 Gew.-Teilen bis 50 Gew.-Teilen und 0,3 Gew.-Teilen bis 0,7 Gew.-Teilen Lichtschutzstabilisatoren aufgebracht ist.

3. Selbstklebende Schutzfolie nach einem der Ansprüche 1 oder 2, **dadurch gekennzeichnet, daß** der Vorstrich halogenfrei ist.

4. Selbstklebende Schutzfolie nach einem der Ansprüche 1 bis 3, **dadurch gekennzeichnet, daß** der Vorstrich aus der Schmelze aufgetragen ist.

5. Selbstklebende Schutzfolie nach einem der Ansprüche 1 bis 4, **dadurch gekennzeichnet, daß** die Schutzfolie eine Dicke von 50 bis 200 µm, vorzugsweise 65 bis 80 µm, aufweist.

6. Selbstklebende Schutzfolie nach einem der Ansprüche 1 bis 5, **dadurch gekennzeichnet, daß** von den 40 Gew.-Teilen bis 70 Gew.-Teilen Polyethylen in der Folie 30 Gew.-Teile bis 50 Gew.-Teile schlagzähes Polyethylen sind.

7. Selbstklebende Schutzfolie nach einem der Ansprüche 1 bis 6, **dadurch gekennzeichnet, daß** die Folie eine Dicke von 40 bis 100 µm, bevorzugt 50 bis 60 µm, aufweist.

8. Selbstklebende Schutzfolie nach einem der Ansprüche 1 bis 7, **dadurch gekennzeichnet, daß** die Folie halogenfrei ist.

9. Selbstklebende Schutzfolie nach einem der Ansprüche 1 bis 8, **dadurch gekennzeichnet, daß** die Selbstklebemasse mit einem oder mehreren Additiven wie Kolophoniumester, Kohlenwasserstoffharzen, Paraffinölen oder Alterungsschutzmitteln abgemischt ist.

10. Selbstklebende Schutzfolie nach einem der Ansprüche 1 bis 9, **dadurch gekennzeichnet, daß** die Selbstklebemasse halogenfrei ist.

11. Selbstklebende Schutzfolie nach einem der Ansprüche 1 bis 10, **dadurch gekennzeichnet, daß** die Selbstklebemasse aus der Lösung aufgetragen ist.

12. Selbstklebende Schutzfolie nach einem der Ansprüche 1 bis 11, **dadurch gekennzeichnet, daß** die Selbstklebemasse aus der Schmelze aufgetragen ist.

13. Verwendung einer selbstklebenden Schutzfolie gemäß einem der Ansprüche 1 bis 12 als Montage- und Transportschutzfolie für frisch lackierte Oberflächen von Automobilen oder Bandstahlblechen.

14. Verwendung einer selbstklebenden Schutzfolie gemäß einem der Ansprüche 1 bis 12 als Kantensicherungsband zur zusätzlichen Befestigung großflächiger selbstklebender Abdeckfolie.

## Claims

1. Self-adhesive protective film, in particular for cars, **characterized in that** a self-adhesive composition is applied to a film as support, the film consisting of a mixture of
- 40 parts by weight to 70 parts by weight of polyethylene,
- 20 parts by weight to 40 parts by weight of polypropylene,
- 8 parts by weight to 15 parts by weight of titanium dioxide,
- 0.3 part by weight to 0.7 part by weight of light stabilizers, and
the self-adhesive composition consisting of polyethylene vinyl acetate
- having a vinyl acetate content of from 40 mol-% to 80 mol-%, especially 70 mol-%, and
- having a loss angle tan δ of from 0.6 to 1.0, measured at a temperature of 60°C and a frequency of 10⁻² Hz, and from 0.4 to 0.7, measured at a temperature of 60°C and a frequency of 10 Hz.

2. Self-adhesive protective film according to Claim 1, **characterized in that** an initial coat of polyethylene vinyl acetate is applied to the film, having a polyethylene content of from 30 parts by weight to 50 parts by weight, and from 0.3 part by weight to 0.7 part by weight of light stabilizers.

3. Self-adhesive protective film according to one of Claims 1 and 2, **characterized in that** the initial coat is halogen-free.

4. Self-adhesive protective film according to one of Claims 1 to 3, **characterized in that** the initial coat is applied from'the melt.

5. Self-adhesive protective film according to one of Claims 1 to 4, **characterized in that** the'protective film has a thickness of from 50 to 200 µm, preferably from 65 to 80 µm.

6. Self-adhesive protective film according to one of Claims 1 to 5, **characterized in that** of the 40 to 70 parts by weight of polyethylene in the film from 30 to 50 parts by weight are high-impact polyethylene.

7. Self-adhesive protective film according to one of Claims 1 to 6, **characterized in that** the film has a thickness of from 40 to 100 µm, preferably from 50 to 60 µm.

8. Self-adhesive protective film according to one of Claims 1 to 7, **characterized in that** the film is halogen-free.

9. Self-adhesive protective film according to one of Claims 1 to 8, **characterized in that** the self-adhesive composition is blended with one or more additives such as rosin esters, hydrocarbon resins, paraffin oils or anti-ageing agents.

10. Self-adhesive protective film according to one of Claims 1 to 9, **characterized in that** the self-adhesive composition is halogen-free.

11. Self-adhesive protective film according to one of Claims 1 to 10, **characterized in that** the self-adhesive composition is applied from solution.

12. Self-adhesive protective film according to one of Claims 1 to 11, **characterized in that** the self-adhesive composition is applied from the melt.

13. Use of a self-adhesive protective film according to one of Claims 1 to 12 as a protective film, during assembly and transportation, for freshly painted surfaces of cars or steel strips.

14. Use of a self-adhesive protective film according to one of Claims 1 to 12 as edge-securing tape for the additional fastening of self-adhesive masking film of large surface area.

## Revendications

1. Film de protection autocollant, en particulier pour automobiles, **caractérisé en ce que** sur un film qui sert de support, on applique une pâte autocollante,
le film étant constitué d'un mélange de :
- 40 parties en poids à 70 parties en poids de polyéthylène,
- 20 parties en poids à 40 parties en poids de polypropylène,
- 8 parties en poids à 15 parties en poids de dioxyde de titane,
- 0,3 partie en poids à 0,7 partie en poids d'agents de stabilisation et de protection contre la lumière, et
la pâte autocollante étant constituée de poly(éthylène-acétate de vinyle)
- avec une teneur en acétate de vinyle de 40% en moles à 80% en moles, et en particulier de 70% en moles et
- avec un angle de perte tan δ de 0,6 à 1,0 lorsqu'il est mesuré à une température de 60°C et à une fréquence de 10⁻² Hz et de 0,4 à 0,7, lorsqu'il est mesuré à une température de 60°C et une fréquence de 10 Hz.

2. Film autocollant de protection selon la revendication 1, **caractérisé en ce qu'**une couche de fond de poly(éthylène-acétate de vinyle) avec une teneur en polyéthylène de 30 parties en poids à 50 parties en poids et de 0,3 partie en poids à 0,7 partie en poids d'agents de stabilisation et de protection contre la lumière est appliquée sur le film.

3. Film autocollant de protection selon la revendication 1 ou 2, **caractérisé en ce que** la couche de fond est exempte d'halogènes.

4. Film autocollant de protection selon l'une quelconque des revendications 1 à 3, **caractérisé en ce que** la couche de fond est appliquée à l'état fondu.

5. Film autocollant de protection selon l'une quelconque des revendications 1 à 4, **caractérisé en ce que** le film de protection présente une épaisseur de 50 à 200 µm et de préférence de 65 à 80 µm.

6. Film autocollant de protection selon l'une quelconque des revendications 1 à 5, **caractérisé en ce que** parmi les 40 parties en poids à 70 parties en poids de polyéthylène du film, 30 parties en poids à 50 parties en poids sont du polyéthylène résistant aux chocs.

7. Film autocollant de protection selon l'une quelconque des revendications 1 à 6, **caractérisé en ce que** le film présente une épaisseur de 40 à 100 µm et de préférence de 50 à 60 µm.

8. Film autocollant de protection selon l'une quelconque des revendications 1 à 7, **caractérisé en ce que** le film est exempt d'halogènes.

9. Film autocollant de protection selon l'une quelconque des revendications 1 à 8, **caractérisé en ce que** la pâte autocollante est mélangée avec un ou plusieurs additifs, par exemple de l'ester de colophane, des résines d'hydrocarbure, des huiles de paraffine ou des agents de protection contre le vieillissement.

10. Film autocollant de protection selon l'une quelconque des revendications 1 à 9, **caractérisé en ce que** la pâte autocollante est exempte d'halogène.

11. Film autocollant de protection selon l'une quelconque des revendications 1 à 10, **caractérisé en ce que** la pâte autocollante est appliquée en solution.

12. Film autocollant de protection selon l'une quelconque des revendications 1 à 11, **caractérisé en ce que** la pâte autocollante est appliquée à l'état fondu.

13. Utilisation d'un film autocollant de protection selon l'une quelconque des revendications 1 à 12 comme film de protection pour le montage et le transport de surfaces fraîchement peintes d'automobiles ou de feuillards d'acier.

14. Utilisation d'un film autocollant de protection selon l'une quelconque des revendications 1 à 12 comme bande de protection des bords pour encore fixer un film autocollant de recouvrement de grandes surfaces.
